# FASCICULE DE BREVET EUROPEEN

(11) **EP 1 671 153 B1**
(45) Date de publication et mention de la délivrance du brevet: **26.09.2012**
(21) Numéro de dépôt: 04787250.2
(22) Date de dépôt: 29.09.2004
(51) Int. Cl.: G01S 13/78, G01S 13/74

(54) **PROCEDE DE PRE-DETECTION DE REPONSES DANS UN RADAR SECONDAIRE ET APPLICATION A LA DETECTION DE REPONSES MODE S**
VERFAHREN ZUR VORDETEKTION VON ANTWORTEN IN EINEM SEKUNDÄR-RADAR UND VERWENDUNG DAFÜR BEI DER DETEKTION VON MODUS S-ANTWORTEN
METHOD FOR THE PRE-DETECTION OF REPLIES IN A SECONDARY RADAR AND USE THEREOF IN THE DETECTION OF MODE S REPLIES

(30) Priorité: 10.10.2003 FR 0311893
(43) Date de publication de la demande: 21.06.2006
(73) Titulaire: Thales, 92200 Neuilly Sur Seine (FR)
(72) Inventeur: BILLAUD, Philippe, THALES Intellectual Property, F-94117 ARCUEIL (FR); DE VOLDER, Claude, THALES Intellectual Property, F-94117 ARCUEIL (FR)
(74) Mandataire: Lucas, Laurent Jacques
(86) Numéro de dépôt international: PCT/EP2004/052361
(87) Numéro de publication internationale: WO 2005/038486

(56) Documents cités:
- WO-A-02/082121
- FR-A- 2 692 995
- US-A- 5 089 822

## Description

La présente invention s'applique à la surveillance du trafic aérien notamment civil, et plus particulièrement, aux systèmes coopératifs sol avion qui permettent de situer en distance radiale et en azimut les avions présents dans un certain volume et de les interroger.

Ces systèmes coopératifs comportent un radar de surveillance dit secondaire et des transpondeurs embarqués à bord d'avions. Le radar secondaire coopère selon un protocole déterminé avec des transpondeurs (appelés encore répondeurs) embarqués à bord d'avions. Le radar secondaire comporte un interrogateur qui émet des impulsions d'interrogation modulées en amplitude et en phase à la fréquence de 1030 MHz pour établir une communication avec les transpondeurs présents dans le lobe d'émission de son antenne. Les transpondeurs présents dans le lobe d'antenne répondent par des trains d'impulsions modulées en amplitude à la fréquence de 1090 MHz. Ces impulsions sont reçues et traitées par un récepteur du radar secondaire.

Les radars secondaires sont utilisés à la fois dans des applications civiles et militaires, en tant que radar de surveillance (connus sous le nom de "Secondary Surveillance Radar" ou SSR dans la littérature anglo-saxonne) ou radar anti-collision (radar embarqué). La Convention sur l'Aviation Civile Internationale, appelée encore norme OACI (Organisation de l'Aviation Civile Internationale) définit un protocole de communication pour les radars secondaires dans son annexe 10 (Télécommunications Aéronautiques), volume IV (Radar de surveillance et systèmes anti-collision). La norme OACI définit plusieurs modes d'interrogation, tel que les modes A, C et S. Le mode S se distingue des modes A et C en ce qu'il permet une interrogation sélective des avions par l'emploi d'un numéro d'identification propre à chaque avion. Toutefois, les interrogations et les réponses du mode S sont longues par rapport aux interrogations et aux réponses en mode A ou C.

Une réponse mode S est formée par un train d'impulsions comportant un préambule et un message. Le préambule comporte quatre impulsions d'une durée de 0,5 µs chacune. Les deux premières et les deux dernières impulsions sont séparées entre elles de 0,5 µs. La première et la troisième impulsion sont séparées entre elles de 3,5 µs.

Les réponses aux interrogations sélectives (mode S) sont de nature à induire de nombreuses fausses détections de réponses secondaires (mode A ou C). Les fausses détections sont aussi appelées des détections de réponses fantômes, c'est à dire d'un signal ayant la forme d'une réponse, mais ne correspondant à aucune réponse réelle. Ainsi, le message d'une réponse mode S peut contenir des séquences d'impulsions ayant la forme d'une réponse secondaire (mode A ou C). De plus, lorsque les signaux sont déformés par des multitrajets, les réponses mode S peuvent induire de nombreuses fausses détections de réponses secondaires. Les fausses détections augmentent la charge de traitement du radar secondaire. Elles peuvent même créer une surcharge conduisant à des non-détection de réponses correctes.

Lors de l'apparition des interrogations sélectives dans la norme OACI, la nécessité de filtrer les réponses mode S s'est fait sentir, pour permettre de détecter les réponses secondaires avec un minimum de fausses détections.

Ainsi la demande de brevet FR 2 692 995 déposée le 30 juin 1992 décrit un procédé de filtrage de réponses mode S permettant de conserver les réponses secondaires reçues pendant le temps des réponses mode S filtrées. Ce procédé est basé sur l'élimination sélective des impulsions appartenant à une réponse mode S.

Ainsi encore, la demande internationale publiée le 17 octobre 2002 sous la référence WO 02/082121 A1 décrit un procédé permettant de distinguer les unes des autres des réponses en mode S entremêlées, transmises simultanément par différents transpondeurs. Le procédé décrit réalise la séparation de différentes réponses en mode S détectées en analysant de manière fine les fréquences des porteuses véhiculant les différentes réponses entremêlées, considérant que la fréquence de la porteuse varie largement d'un transpondeur à l'autre dans la fenêtre de tolérance imposée par l'OACI pour la valeur de la fréquence de transmission des réponses en mode S.

Quoiqu'il en soit, ce procédé, ainsi que les autres procédés de filtrages des réponses mode S, réalisent une détection préalable des réponses mode S. La détection préalable peut être effectuée sur la présence des quatre impulsions du préambule.

Les procédés de filtrage utilisant les impulsions du préambule ne sont plus efficaces lorsque des impulsions du préambule sont abîmées ou absentes. Or une telle situation est courante en cas de chevauchement temporel de réponses au niveau du récepteur, connu aussi sous le nom de garbling. En effet, il peut arriver que le préambule d'une réponse mode S soit mélangé à une autre réponse secondaire ou mode S, rendant ce préambule non identifiable.

L'invention vise à résoudre ces problèmes, et notamment à dire à établir une détection de réponses mode S, cette détection étant efficace même en présence de garbling et de multitrajets. A cet effet, l'invention a notamment pour objet un procédé dans lequel on traite les signaux reçus avant de décoder les réponses ou de rechercher la présence d'éventuelles impulsions du préambule.

A cet effet, on réalise un premier étage de détection des réponses mode S, mettant en oeuvre le procédé selon l'invention, dans lequel le seuil de détection est abaissé par rapport aux techniques de détections conventionnelles. Ce premier étage de détection permet de détecter les réponses abîmées, c'est à dire qui ne sont pas identifiables par leurs impulsions de préambule. On obtient à la sortie de ce premier étage de détection des pré-détections de réponses mode S. Dans le cadre de la présente demande, on entend par "pré-détection d'une réponse" la reconnaissance de la présence d'une réponse dans un signal. Une détection se distingue d'une pré-détection en ce que la position de la réponse est connue de manière précise dans une détection. Ainsi, une détection d'une réponse mode S permet de déterminer la position d'un avion, alors qu'une simple pré-détection ne le permet pas.

Lorsqu'on cherche à traiter les réponses mode S elles-mêmes, on peut utiliser un second étage de détection, ayant pour fonction de confirmer certaines pré-détections issues du premier étage de détection. En d'autres termes, on utilise les pré-détections pour réaliser des détections. En utilisant un second étage de détection, on élève le seuil de détection, de manière à éliminer les réponses dont les messages sont trop abîmés pour être décodés.

En distinguant ainsi deux étages de détection, on peut utiliser des critères de détection différents, l'un adapté au filtrage des réponses mode S pour le traitement des réponses secondaires, l'autre adapté au traitement des réponses modes S elles-mêmes.

Ainsi, l'invention a notamment pour objet un procédé de pré-détection de réponses dans un radar secondaire, les réponses à pré-détecter comprenant un message codé par un signal modulé, caractérisé en ce que :
(i) on identifie la présence d'un signal présentant des caractéristiques de modulation conformes à celles d'un message d'une réponse à pré-détecter ;
(ii) on mesure la durée du signal identifié ;
(iii) on compare la durée du signal identifié à une durée minimale, la durée minimale étant déterminée à partir d'une durée attendue des messages des réponses à pré-détecter.

Les réponses dont la durée est supérieure à la durée minimale forment ainsi des pré-détections selon l'invention.

Selon un mode de réalisation avantageux, on utilise deux voies, ce qui apporte un net gain d'efficacité. Par exemple on peut utiliser la voie somme et la voie différence. La voie somme dont le gain est sensiblement constant dans le lobe principal permet de discriminer des réponses de puissances différentes. La voie différence dont le gain varie fortement avec l'azimut permet de discriminer des réponses de puissances similaires (cas du garbling synchrone ou des fruits) présentant un écart en azimut.

D'autres caractéristiques et avantages de l'invention apparaîtront à la lecture de la description détaillée suivante présentée à titre d'illustration non limitative et faite en référence aux figures annexées, lesquelles représentent :
- la figure 1, un exemple d'utilisation de radars secondaires ;
- les figures 2a et 2b, des exemples d'interrogations selon la norme OACI ;
- la figure 3, un exemple de réponse mode S selon la norme OACI ;
- la figure 4, un synoptique d'un exemple de radar secondaire mettant en oeuvre le procédé selon l'invention ;
- les figures 5a, 5b et 5c, respectivement un exemple de signal log vidéo analogique reçu en présence d'une impulsion, ce signal numérisé, et le résultat de la détection de cette impulsion par seuillage ;
- la figure 6, un exemple de dispositif pour générer un créneau ;
- la figure 7, un exemple de mise en oeuvre de l'invention pour la pré-détection d'une réponse mode S ;
- la figure 8, un exemple de mise en oeuvre de l'invention appliqué à la détection d'une réponse mode S dont le préambule est brouillé ;
- la figure 9, une alternative de mise en oeuvre par rapport à l'exemple de la figure 8.

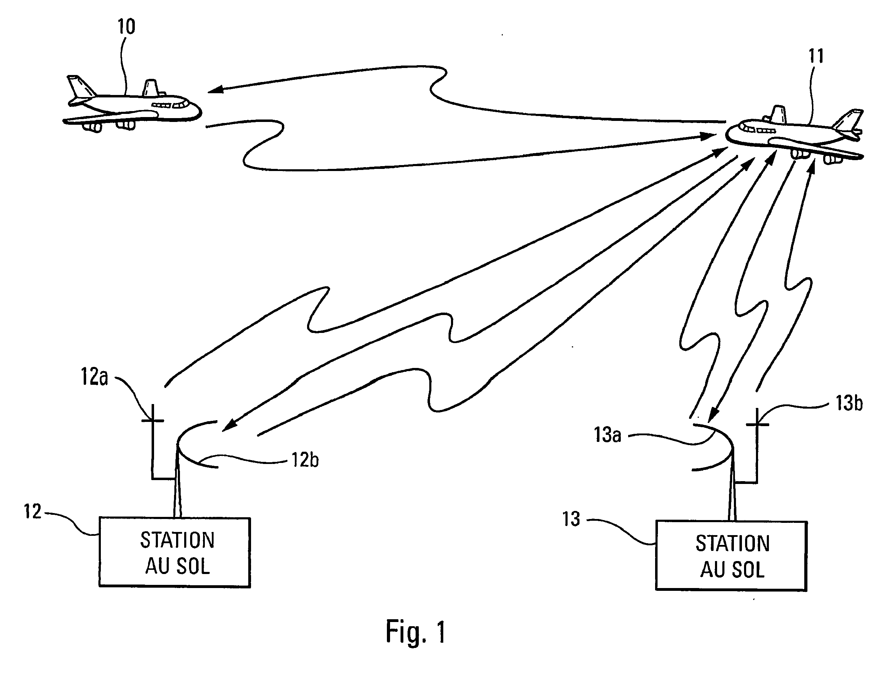

On se réfère maintenant à la figure 1 sur laquelle est représenté un exemple d'utilisation de radars secondaires. Les radars secondaires peuvent équiper des stations au sol 12, 13. Ils comprennent généralement une antenne directionnelle 12a, 13a. Chaque antenne directionnelle 12a, 13a est utilisée pour émettre une interrogation en direction de cibles. La cible 11 qui reçoit une interrogation répond selon un protocole déterminé par l'intermédiaire d'un transpondeur embarqué (non représenté). Chaque antenne directionnelle 12a, 13a est généralement associée à une antenne omnidirectionnelle 12b, 13b. L'antenne omnidirectionnelle est utilisée pour émettre des impulsions (une ou deux généralement) permettant d'inhiber les réponses des transpondeurs situés dans des lobes d'émission secondaires de l'antenne directionnelle 12a, 13a.

Les cibles 10, 11 peuvent en outre communiquer entre elles selon le même protocole. Les cibles comprennent alors non seulement un transpondeur, mais aussi un radar secondaire (interrogateur).

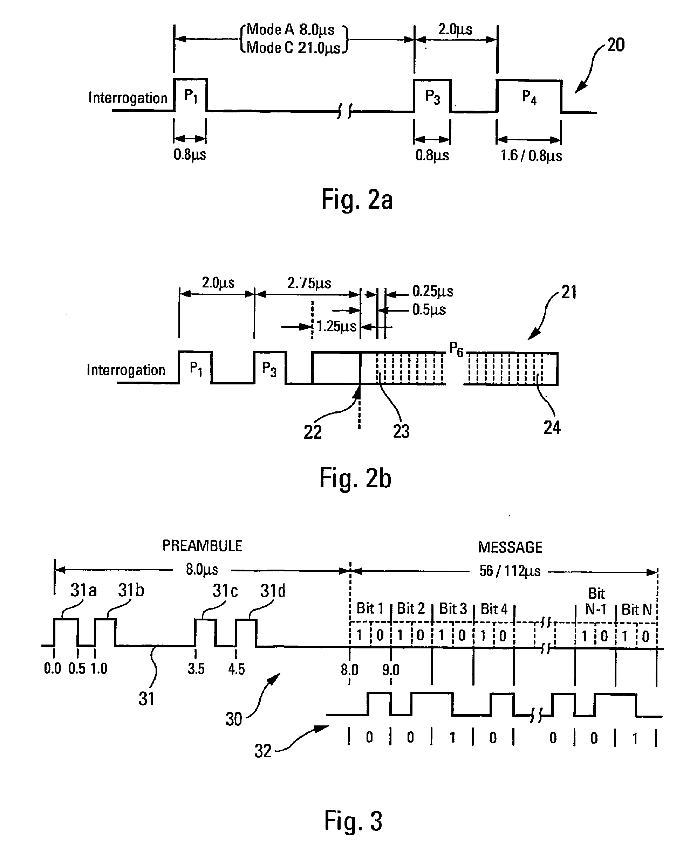

On se réfère maintenant à la figure 2a sur laquelle est représenté un exemple d'interrogation 20 selon la norme OACI. L'homme du métier trouvera plus de précisions dans le document relatif à la norme elle-même.

La fréquence porteuse d'une interrogation est de 1030 MHz, plus ou moins 0,2 MHz. Une interrogation comprend deux impulsions désignées par P₁ et P₃. L'intervalle entre P₁ et P₃ détermine le mode d'interrogation. Un intervalle de 8,0 µs (plus ou moins 0,2 µs) correspond à une interrogation dite "mode A". Un intervalle de 21,0 µs (plus ou moins 0,2 µs) correspond à une interrogation dite "mode C". La durée des impulsions P₁, P₃ est de 0,8 µs plus ou moins 0,1 µs.

Une interrogation multimode comprend en outre une troisième impulsion, P₄. L'intervalle entre la deuxième impulsion P₃ et la troisième impulsion P₄ est de 2,0 µs (plus ou moins 0,05 µs). La durée de la troisième impulsion détermine le mode d'interrogation. Une impulsion courte (0,8 µs plus ou moins 0,1 µs) correspond à une interrogation dite "mode A/C-only all-call". Une impulsion longue (1,6 µs plus ou moins 0,1 µs) correspond à une impulsion dite "mode A/C/S all-call".

L'homme du métier trouvera dans le document relatif à la norme OACI les réponses correspondant à ces différentes interrogations.

On se réfère maintenant à la figure 2b sur laquelle est représenté un autre exemple d'interrogation 21 selon la norme OACI.

Une interrogation dite "mode S" comprend trois impulsions P₁, P₂, P₆. La durée des impulsions P₁ et P₂ est de 0,8 µs plus ou moins 0,1 µs. La durée de l'impulsion P₆ détermine le mode d'interrogation. Une durée de 16,25 µs plus ou moins 0,25 µs correspond à une interrogation dite "short mode S" (SMS). Une durée de 30,25 µs plus ou moins 0,25 µs correspond à une interrogation dite "long mode S" (LMS). L'intervalle entre P₁ et P₂ est de 2,0 µs plus ou moins 0,05 µs. L'impulsion P₆ comprend une première inversion de phase 22. L'intervalle entre P₂ et l'inversion de phase 22 est de 2,75 µs plus ou moins 0,05 µs. L'impulsion P₆ débute 1,25 µs plus ou moins 0,05 µs avant l'inversion de phase 22. L'impulsion P₆ comprend des inversions de phase permettant de coder des bits de données 23 à 24. Une interrogation SMS comprend 56 bits, une interrogation LMS comprend 112 bits. Des informations supplémentaires concernant ce type d'interrogation peuvent être trouvées dans la norme OACI.

On se réfère maintenant à la figure 3 sur laquelle est représenté un exemple de réponse mode S selon la norme OACI. La réponse 30 comprend un préambule 31 comprenant quatre impulsions 31 a, 31 b, 31 c, 31 d et un message 32. Le message 32 comprend 56 ou 112 bits (en réponse respectivement à une interrogation SMS et LMS). Les bits du message sont codés par un signal modulé en position. Chaque période de 1 µs correspond à un bit de message. En d'autres termes, la période de modulation du signal est de 1 MHz. La valeur du bit est codée par la position d'une impulsion de 0,5 µs dans la période de 1 µs. Lorsque l'impulsion est au début de la durée (voir par exemple les bits n°3, N sur la figure), le bit vaut 1. Lorsque l'impulsion est à la fin de la durée (voir par exemple les bits n° 1, 2, 4, N-1 sur la figure), le bit vaut 0.

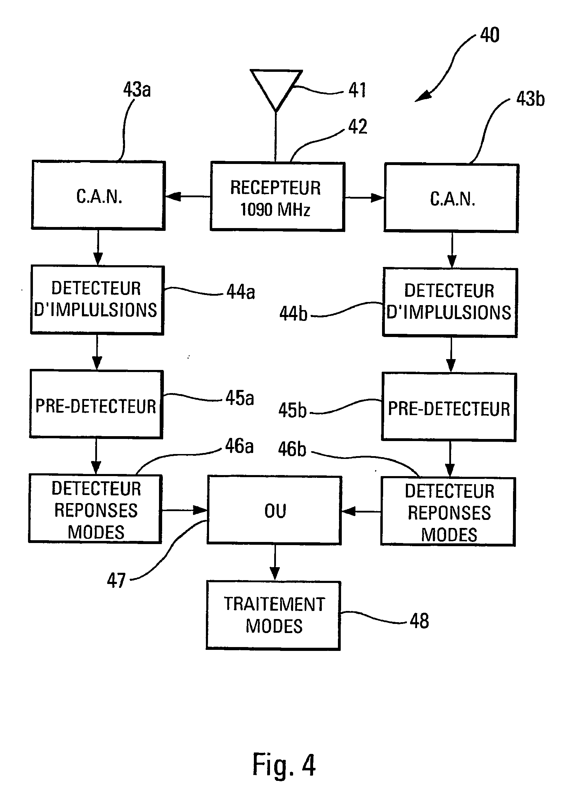

On se réfère maintenant à la figure 4 sur laquelle est représenté un exemple de radar secondaire mettant en oeuvre le procédé selon l'invention. Le radar 40 comprend une antenne 41 apte à recevoir un signal hyperfréquence. Cette antenne 41 est reliée à un récepteur permettant de transposer le signal hyperfréquence en signal vidéo. Le signal vidéo est du type de celui représenté sur la figure 3. Toutefois, ce signal peut être brouillé lors de la réception.

Le signal en sortie du récepteur peut être séparé en deux voies par exemple, une voie somme 43a, 44a, 45a, 46a et une voie différence 43b, 44b, 45b, 46b. Ces voies sont obtenues en effectuant des combinaisons différentes (en gain et en phase) des signaux issus des éléments rayonnant de l'antenne de réception 41 (antenne à réseau). Chaque combinaison correspond à un diagramme d'antenne différent. Bien entendu, le nombre de voies peut être égal à un ou supérieur à deux. Les traitements sur chaque voie sont similaires et sont réalisés en parallèle.

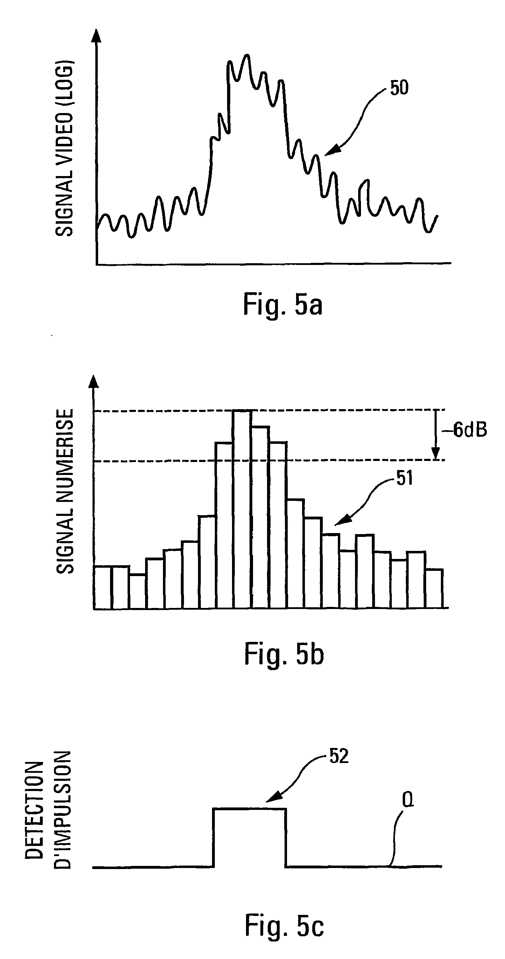

On se réfère maintenant aux figures 5a et 5b, sur lesquelles sont représentés respectivement un exemple de signal log vidéo analogique 50 reçu en présence d'une impulsion, et signal numérisé 51. Le signal log vidéo analogique 50 est le signal en sortie du récepteur 42. Il est numérisé sur chaque voie par un convertisseur analogique-numérique 43a, 43b (voir figure 4) pour donner le signal numérisé 51. Avantageusement, on choisit une fréquence d'échantillonnage de l'ordre de 20 MHz, ce qui permet une analyse précise du signal, tout en obtenant un bon compromis coût/efficacité.

On se réfère maintenant à la figure 5c. Sur chaque voie, le signal numérisé 51 est ensuite converti en un signal de détection d'impulsion, référencé Q. Le signal Q est généré par un détecteur d'impulsion 44a, 44b (voir figure 4) effectuant seuillage adaptatif, c'est à dire par rapport à un niveau déterminé en fonction d'un niveau crête. Ce seuil peut être par exemple un seuil à mi-hauteur en tension, c'est à dire -6 dB en vidéo log. Pendant la durée d'une impulsion, le détecteur d'impulsion 44a, 44b génère un signal stable 52 à un niveau prédéterminé. On s'affranchit ainsi des fluctuations de niveaux d'une impulsion à l'autre.

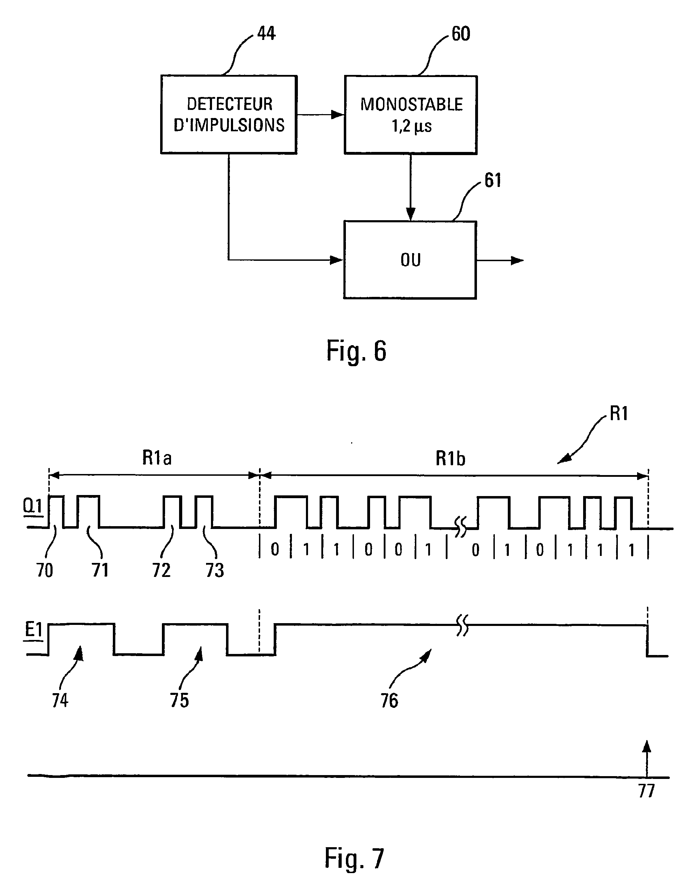

On se réfère maintenant à la figure 6 sur laquelle est représenté un exemple de dispositif pour générer un créneau de pré-détection. Sur chaque voie, le détecteur d'impulsion 44 (c'est à dire 44a ou 44b) est relié à un monostable numérique 60. Le monostable 60 peut être déclenché sur les fronts montants ou descendants. Il permet de générer un signal stable pendant une durée déterminée.

Avantageusement, le monostable est déclenché sur les fronts descendants, et la durée est de l'ordre d'une période de modulation, c'est à dire 1 µs pour une réponse mode S selon la norme OACI. La durée du signal stable est avantageusement supérieure à une période de modulation, par exemple de 20%, pour accepter une certaine tolérance. Ainsi, dans cet exemple, la durée pendant laquelle le signal stable est généré est sensiblement égale à 1,2 µs.

La sortie du monostable 60 peut être reliée à la sortie du détecteur d'impulsion 44 par l'intermédiaire d'une porte OU 61. Ceci permet, lorsque le monostable est déclenché sur les fronts descendants, d'obtenir le début de l'impulsion en sortie du générateur de créneaux.

On se réfère maintenant à la figure 7 sur laquelle est représenté un exemple de mise en oeuvre de l'invention pour la pré-détection d'une réponse mode S. Le radar secondaire reçoit un signal, référencé Q1 en sortie du détecteur d'impulsion, correspondant à une réponse mode S. Cette réponse est référencée R1 avant sa transposition en hyperfréquence. On suppose dans cet exemple que le signal n'est pas brouillé. Le signal reçu Q1 est donc similaire à la réponse émise R1.

La réponse mode S comprend un préambule R1 a et un message R1 b. Le préambule R1 a comprend quatre impulsions 70, 71, 72, 73. Le message R1b comprend 56 ou 112 bits codés en position. Dans la réponse illustrée figure 7, les premiers bits du message sont 0, 1, 1, 0, 0, 1 et les derniers bits sont 0, 1, 0, 1, 1, 1.

Afin de pré-détecter une réponse, on cherche à détecter l'enveloppe du signal. En d'autres termes, on identifie la présence d'un signal présentant des caractéristiques de modulation conformes à celles d'un message d'une réponse mode S. Les messages des réponses mode S étant codés par un signal modulé en position, on identifie la présence d'un signal lorsqu'on est en présence d'une séquence d'impulsions dans laquelle chaque impulsion de la séquence est séparée de celle qui précède par au maximum une durée de l'ordre d'une période de modulation. On génère à cet effet le créneau de pré-détection.

En sortie du dispositif permettant de générer le créneau de pré-détection, on observe le signal référencé E1. Les impulsions du préambule R1a donnent deux créneaux 74, 75. Le premier créneau 74 correspond au deux premières impulsions 70, 71 du préambule R1 a. Le second créneau 75 correspond aux deux impulsions suivantes 72, 73 du préambule R1 a. Les deux créneaux 74 et 75 ont une durée de l'ordre de deux périodes de modulations, c'est à dire 2 µs.

Le message lui-même R1b donne un unique créneau 76 dont la durée est sensiblement égale à celle du message. En effet, les impulsions du message sont séparées d'au plus une période de modulation (même lors d'une succession de bits 1 puis 0). Par conséquent, le créneau 76 a une durée de l'ordre de 56 µs ou de 112 µs selon que la réponse mode S est une réponse SMS ou LMS.

On mesure la durée du signal identifié, c'est à dire dans cet exemple des créneaux générés. Puis on compare cette durée mesurée à une durée minimale déterminée. Cette durée minimale est fonction de la durée attendue des messages des réponses à pré-détecter. La durée minimale est déterminée de sorte à être inférieure ou égale à la durée du signal identifié de toute réponse à pré-détecter. Si la durée du signal identifié est supérieure à la durée minimale, on pré-détecte une réponse.

Ainsi, la durée des créneaux 74 et 75 étant largement inférieure à la durée d'un message, il n'y a aucune pré-détection. Par contre, la durée du créneau 76 étant celle d'une réponse, on pré-détecte 77 une réponse.

Lorsqu'on cherche à détecter des réponses mode S, on connaît à priori la durée de la réponse attendue (56 µs ou 112 µs). Selon l'invention, si on connaît a priori la nature de la réponse (SMS ou LMS), on détermine la durée minimale à partir de la durée du message de la réponse correspondante (56 µs ou 112 µs). Si on ne connaît pas a priori la nature de la réponse, on détermine la durée minimale à partir de la durée du message de la réponse la plus courte (c'est à dire 56 µs pour une réponse SMS).

La durée du créneau varie en fonction de la valeur du premier et du dernier bit de message. Si le premier bit de message est remplacé par un 1 (au lieu du 0 dans l'exemple illustré), le créneau 76 commence une demi période de modulation plus tôt, ce qui allonge d'autant le créneau 76. Si le dernier bit de message est remplacé par un 0 (au lieu du 1 dans l'exemple illustré), le créneau 76 termine une demi période de modulation plus tard, ce qui allonge d'autant le créneau 76. Par conséquent, la durée du signal identifié varie d'une période de modulation (1 µs) selon les valeurs en début et fin de message.

Selon l'invention, pour tenir compte de cette fluctuation, la durée minimale est déterminée à partir de la durée d'un créneau généré à partir d'un message de réponse mode S commençant par un 0 et se terminant par un 1. Les réponses commençant par d'autres valeurs ou se terminant par d'autres valeurs généreront des créneaux de durée supérieure.

Avantageusement, cette durée minimale peut être proportionnelle à la durée d'un créneau généré par une réponse mode S dont le message commence par un 0 et se termine par un 1. Le coefficient de proportionnalité permettant de définir la durée minimale à partir de la durée du créneau est strictement inférieur à 1 pour accepter une certaine tolérance, ou égal à 1 sinon.

Par exemple lorsque les créneaux sont générés à partir du front descendant des impulsions, la durée minimale peut être 54 µs (voir l'illustration figure 7).

L'invention permet ainsi de pré-détecter des réponses mode S sans utiliser la position des impulsions du préambule. Ceci permet de pré-détecter des réponses mode S ayant des préambules brouillés.

Selon un mode de réalisation avantageux, lorsque la longueur de la réponse est connue, on peut déduire la position du préambule soit à partir de la fin du message, soit à partir du début du message. Ceci permet de détecter des réponses.

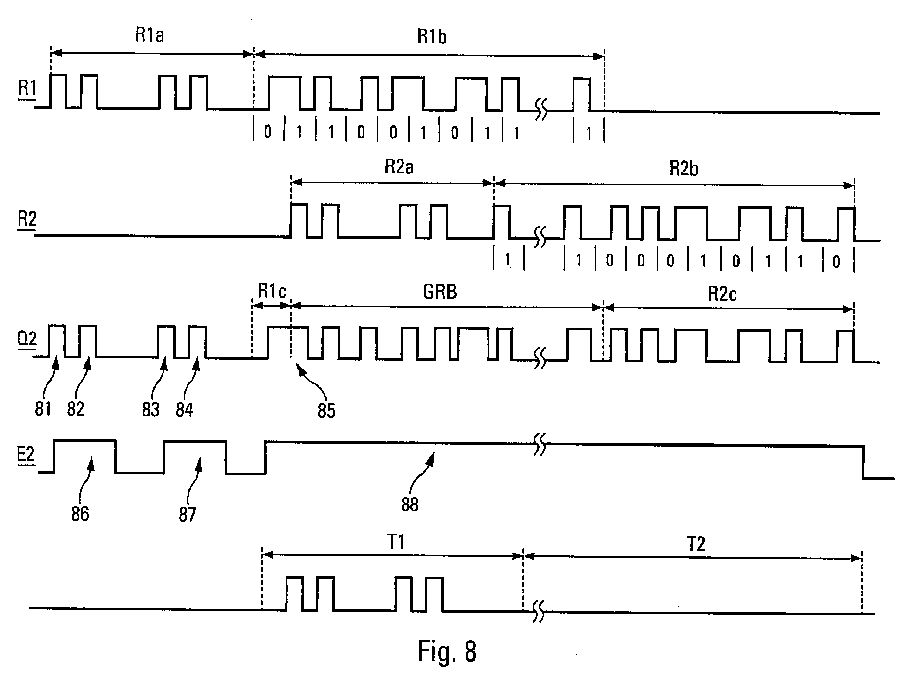

On se réfère maintenant à la figure 8 sur laquelle est présenté un exemple de mise en oeuvre de l'invention appliqué à la détection d'une réponse mode S dont le préambule est brouillé.

Une première réponse mode S, référencée R1, est émise par un premier transpondeur. Une seconde réponse mode S, référencée R2, est émise par un second transpondeur. Les distances respectives des transpondeurs par rapport au radar secondaire et les moments d'émission des deux réponses font que les réponses R1, R2 arrivent mélangées au niveau du radar secondaire. Plus précisément, le préambule R2a de la seconde réponse est mélangé au message R1b de la première réponse. On référence par Q2 le signal reçu par le radar secondaire en sortie du détecteur d'impulsion.

Le signal Q2 comprend des impulsions claires 81, 82, 83, 84 qui correspondent au préambule R1 a de la première réponse R1. Ces quatre premières impulsions sont suivies d'autres impulsions, dont certaines 85 sont brouillées, qui se répartissent en trois périodes temporelles R1c, GRB, R2c. Le signal Q2 pendant la première période R1c correspond au début du message R1b de la première réponse. La suite du signal Q2, pendant la seconde période GRB, correspond au mélange de la suite du message R1 b de la première impulsion avec le préambule R2a et le début du message R2b de la seconde impulsion. La fin du signal Q2, pendant la troisième période R2c, correspond à la fin du message R2b de la seconde réponse.

En sortie du dispositif permettant de générer le créneau de pré-détection, on observe le signal référencé E2. Les impulsions du préambule R1 a donnent deux créneaux 86, 87 d'une durée de l'ordre de deux périodes de modulations (2 µs). Les impulsions suivantes donnent un créneau qui commence à la première impulsion du message R1 b de la première réponse, et s'arrête à la dernière impulsion du message R2b de la seconde réponse. La durée du créneau permet donc de pré-détecter au moins une réponse.

Lorsque la durée du créneau est supérieure à la durée minimale déterminée (pré-détection), on détermine la position de la fin du message de la dernière réponse. Cette position correspond à la fin du créneau. On peut alors en déduire la position du préambule de la dernière réponse.

De même, on détermine la position du début du message de la première réponse. Cette position correspond au début du créneau. On peut alors en déduire la position du préambule de la première réponse.

Il est ainsi possible de déterminer la position des préambules de deux réponses en cas de mélange de réponses, ces positions étant déterminées sans analyser les impulsions présumées être de préambule.

Lorsque la position du préambule est connue, on peut effectuer une détection à partir du préambule. Par exemple, on peut utiliser des lignes à retard pour superposer les quatre impulsions du préambule de la dernière (seconde) réponse. Ce préambule étant brouillé, on peut ne rechercher la présence de 1, 2 ou 3 impulsions sur les quatre. En d'autres termes, on génère une détection lorsque au moins N impulsions sur quatre sont présentes à la position prévue T1 du préambule, où N est un paramètre dont la valeur est comprise entre 1 et 4, la valeur limite 1 étant utilisée pour détecter des réponses très brouillées, la valeur limite 4 étant utilisée pour détecter des réponses claires.

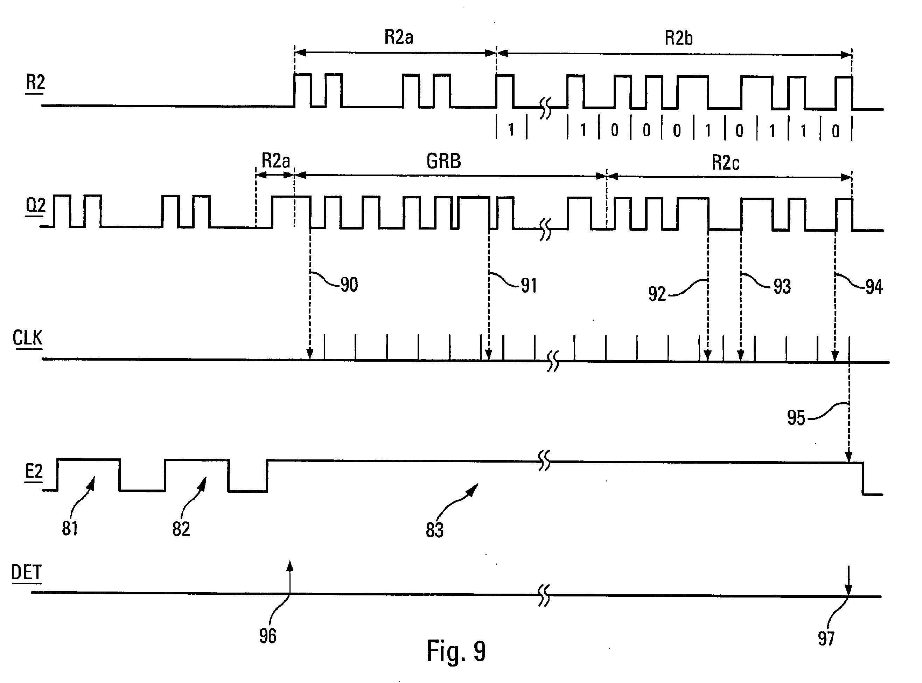

Avantageusement, en cas de mélange de réponses, on ne cherche à détecter le préambule que de la première réponse mode S, c'est à dire le préambule clair. La dernière réponse peut être détectée par la fin du message et son contenu message comme décrit en relation avec la figure 9.

La réponse R2 et le signal Q2 y sont représentés. Selon cette variante avantageuse, on analyse les impulsions présentes dans la zone où une réponse a été identifiée (R2a, GRB, R2c) à la recherche d'une transition 0 - 1 ou 1 - 0, c'est à dire d'une impulsion de 1 µs ou d'un trou de 1 µs.

Dès la première impulsion ou trou, on génère 90 un signal d'horloge CLK au pas de 1 µs. On relance 91, 92, 93, 94 l'horloge à chaque impulsion ou trou de 1 µs. Ceci permet de synchroniser l'horloge sur la fin, supposée claire, du dernier message. On lève ainsi l'incertitude de 0,5 µs, car à chaque impulsion d'horloge, on sait qu'on est au milieu de l'intervalle de 1 µs d'un bit de message. Le signal d'horloge 95 se situant juste après la retombée du créneau de pré-détection permet de trouver la position précise de la fin du message de la dernière réponse. On en déduit alors la position précise de la première impulsion du préambule de la dernière réponse.

Grâce à cette technique, on peut effectuer des détections, c'est à dire estimer la position précise d'une réponse (on lève l'ambiguïté de 0,5 µs).

Ainsi, on détecte le début (préambule) de la dernière réponse mode S sans décoder le message. On peut procéder de façon analogue pour détecter le début (préambule) de la première réponse mode S.

On peut réaliser ainsi la détection 96, 97 de réponses mode S sans utiliser les impulsions de leurs préambules.

On a ainsi décrit deux modes de détection possibles :
- à partir du préambule, dont on détermine au préalable la position (figure 8) ou,
- à partir du message lui-même, lequel est utilisé pour générer un signal d'horloge à un rythme binaire, pour déterminer précisément la position du début de la réponse à partir du début ou de la fin du message (figure 9).

Ces deux modes de détections peuvent être mis en oeuvre en parallèle. Si on a détecté une réponse par ces deux modes (cas d'une réponse claire ou dont seulement une partie du message est brouillé par exemple), on utilise préférentiellement le mode de détection à partir du préambule.

## Revendications

1. Procédé de pré-détection de réponses en mode S dans un radar secondaire, les réponses à pré-détecter comprenant un message codé par un signal modulé, **caractérisé en ce que**:
(i) on identifie la présence d'un signal présentant des caractéristiques de modulation conformes à celles d'un message (32) d'une réponse mode S à pré-détecter;
(ii) on mesure la durée du signal identifié;
(iii) on compare la durée du signal identifié à une durée minimale, la durée minimale étant déterminée à partir d'une durée attendue des messages des réponses à pré-détecter;
une pré-détection de réponse étant réalisée lorsque la durée du signal identifié est supérieure à la durée attendue.

2. Procédé selon la revendication 1 dans lequel les messages étant codés par un signal modulé en position, on identifie la présence d'un signal lorsqu'on est en présence d'une séquence d'impulsions dans laquelle chaque impulsion de la séquence est séparée de celle qui précède par au maximum une durée de l'ordre d'une période de modulation.

3. Procédé selon la revendication 2 dans lequel, on identifie la présence d'un signal en générant un créneau (88) dont la durée est sensiblement égale à la durée séparant la première de la dernière impulsion de la séquence d'impulsions, à une période de modulation près.

4. Procédé selon la revendication 3 dans lequel pour générer un créneau, on détecte des impulsions (44), et on génère un signal stable (60) à partir de la détection pendant une durée égale au temps maximum jusqu'à la prochaine détection d'une impulsion de message.

5. Procédé selon la revendication 4 dans lequel la durée du signal stable généré à partir d'un front descendant est sensiblement égale à la durée d'une période de modulation majorée de 20%.

6. Procédé selon la revendication 4 ou 5 dans lequel les impulsions constituant un message sont détectées en comparant les impulsions formant le signal reçu à un seuil défini en fonction du niveau crête du signal.

7. Procédé selon l'une quelconque des revendications 3 à 6 dans lequel on mesure la durée du signal identifié en mesurant la durée du créneau (88).

8. Procédé selon l'une quelconque des revendications précédentes dans lequel les réponses à pré-détecter étant des réponses mode S, la durée minimale des messages est de l'ordre de 56 microsecondes pour les réponses courtes ou de l'ordre de 112 microsecondes pour les réponses longues.

9. Procédé de détection de réponses dans un radar secondaire, les réponses à détecter comprenant un préambule et un message, le préambule contenant des données de protocole, le message étant codé par un signal modulé, **caractérisé en ce que**:
- on met en oeuvre le procédé de pré-détection selon l'une quelconque des revendications précédentes, pour pré-détecter les réponses à détecter;
- on détermine une position prévue du préambule de chaque réponse pré-détectée;
- on vérifie si des données de protocole déterminées sont présentes à ladite position prévue du préambule.

10. Procédé de détection selon la revendication 9 dans lequel la position prévue du préambule est déterminée à partir de l'instant de début ou de fin du signal identifié à l'étape (ii) du procédé de pré-détection.

11. Procédé selon l'une des revendications 9 ou 10 dans lequel les réponses à détecter étant des réponses mode S, on génère une détection lorsque au moins N impulsions sur quatre sont présentes à la position prévue du préambule, où N est un paramètre dont la valeur est comprise entre 1 et 4, la valeur limite 1 étant utilisée pour détecter des réponses très brouillées, la valeur limite 4 étant utilisée pour détecter des réponses claires.

12. Procédé de détection de réponses dans un radar secondaire, les réponses à détecter comprenant un message codé par un signal modulé, **caractérisé en ce que**:
- on met en oeuvre le procédé de pré-détection selon l'une quelconque des revendications1 à 8, pour pré-détecter les réponses à détecter;
- on détermine l'instant de début ou de fin du message;
- on génère un signal d'horloge CLK à un rythme binaire à partir de la première transition d'état intervenant après un état de durée égale à la durée d'un bit d'un message mode S et pendant toute la durée du message, la période de l'horloge étant égale à la durée d'un bit du message;
- on détermine précisément la position du début de la réponse à partir du début ou de la fin du message, cette position étant déterminée à partir de la dernière impulsion d'horloge produite (95).

## Claims

1. A method for pre-detecting mode S responses in a secondary radar, the responses to be pre-detected comprising a message that is coded by a modulated signal, **characterised in that**:
(i) the presence of a signal with modulation characteristics that conform to those of a message (32) of a mode S response to be pre-detected is identified;
(ii) the duration of the identified signal is measured;
(iii) the duration of the identified signal is compared with a minimum duration, said minimum duration being determined on the basis of an expected duration of response messages to be pre-detected;
a response pre-detection being carried out when the duration of the identified signal is greater than the expected duration.

2. The method according to claim 1, wherein with the messages being coded by a position modulated signal, the presence of a signal is identified when a pulse sequence is present in which each pulse of the sequence is separated from its preceding pulse by at most the duration of the order of a modulation period.

3. The method according to claim 2, wherein the presence of a signal is identified by generating a time slot (88), the duration of which is essentially equal to the duration between the first and the last pulse of the pulse sequence, more or less one modulation period.

4. The method according to claim 3, wherein, in order to generate a time slot, pulses (44) are detected and a stable signal (60) is generated on the basis of the detection for a duration that is equal to the maximum time to the next detection of a message pulse.

5. The method according to claim 4, wherein the duration of the stable signal that is generated from a falling edge is essentially equal to the duration of a modulation period that is increased by 20%.

6. The method according to claim 4 or 5, wherein the pulses that constitute a message are detected by comparing the pulses that form the received signal with a threshold that is defined as a function of the peak level of the signal.

7. The method according to any one of claims 3 to 6, wherein the duration of the identified signal is measured by measuring the duration of the time slot (88).

8. The method according to any one of the preceding claims, wherein the responses to be pre-detected are mode S responses, the minimum duration of the messages is of the order of 56 microseconds for short responses or of the order of 112 microseconds for long responses.

9. A method for detecting responses in a secondary radar, the responses to be detected comprising a preamble and a message, the preamble containing protocol data, the message being coded by a modulated signal, **characterised in that**:
- the pre-detection method according to any one of the preceding claims is implemented to pre-detect the responses to be detected;
- a predicted position of the preamble is determined for each pre-detected response;
- the presence of determined protocol data at said predicted position of the preamble is confirmed.

10. The detection method according to claim 9, wherein the predicted position of the preamble is determined on the basis of the start or end instant of the signal identified during step (ii) of the pre-detection method.

11. The method according to any one of claims 9 or 10, wherein, with the responses to be detected being mode S responses, a detection is generated when at least N pulses in four are present at the predicted position of the preamble, where N is a parameter with a value between 1 and 4, the limit value 1 being used to detect very unclear responses, the limit value 4 being used to detect clear responses.

12. A method for detecting responses in a secondary radar, the responses to be detected comprising a message that is coded by a modulated signal, **characterised in that**:
- the pre-detection method according to any one of claims 1 to 8 is implemented to pre-detect the responses to be detected;
- the start or end instant of the message is determined;
- a clock signal CLK is generated at a bit rate on the basis of the first transition status that occurs after a duration status that is equal to the duration of a bit of a mode S message, and throughout the entire duration of the message, the clock period is equal to the duration of a bit of the message;
- the start position of the response is precisely determined on the basis of the start or end of the message, said position being determined on the basis of the last clock pulse (95) produced.

## Patentansprüche

1. Verfahren zur Vordetektion von Modus-S-Antworten in einem Sekundär-Radar, wobei die vorzudetektierenden Antworten eine Nachricht enthalten, die von einem modulierten Signal codiert wird, **dadurch gekennzeichnet, dass**:
(i) die Anwesenheit eines Signals identifiziert wird, das Modulationscharakteristiken aufweist, die denen einer Nachricht (32) einer vorzudetektierenden Modus-S-Antwort entsprechen;
(ii) die Dauer des identifizierten Signals gemessen wird;
(iii) die Dauer des identifizierten Signals mit einer Mindestdauer verglichen wird, wobei die Mindestdauer anhand einer erwarteten Dauer von Nachrichten von vorzudetektierenden Antworten ermittelt wird;
wobei eine Antwortvordetektion dann durchgeführt wird, wenn die Dauer des identifizierten Signals länger ist als die erwartete Dauer.

2. Verfahren nach Anspruch 1, bei dem die Nachrichten von einem positionsmodulierten Signal codiert werden, die Anwesenheit eines Signals identifiziert wird, wenn eine Impulsfolge vorliegt, in der jeder Impuls der Folge vom vorhergehenden um maximal eine Dauer in der Größenordnung einer Modulationsperiode getrennt ist.

3. Verfahren nach Anspruch 2, bei dem die Anwesenheit eines Signals durch Erzeugen eines Rechteckimpulses (88) identifiziert wird, dessen Dauer im Wesentlichen gleich der Dauer, mehr oder weniger einer Modulationsdauer, ist, die den ersten vom letzten Impuls in der Impulsfolge trennt.

4. Verfahren nach Anspruch 3, bei dem zum Erzeugen eines Rechteckimpulses die Impulse (44) detektiert werden und ein stabiles Signal (60) auf der Basis der Detektion während einer Dauer erzeugt wird, die gleich der maximalen Zeit bis zur nächsten Detektion eines Nachrichtenimpulses ist.

5. Verfahren nach Anspruch 4, bei dem die Dauer des stabilen Signals, das von einer abfallenden Flanke erzeugt wird, im Wesentlichen gleich der Dauer einer um 20 % verlängerten Modulationsperiode ist.

6. Verfahren nach Anspruch 4 oder 5, bei dem die eine Nachricht bildenden Impulse durch Vergleichen der das empfangene Signal bildenden Impulse mit einem Schwellenwert detektiert werden, der in Abhängigkeit vom Scheitelpegel des Signals definiert wird.

7. Verfahren nach einem der Ansprüche 3 bis 6, bei dem die Dauer des identifizierten Signals durch Messen der Dauer des Rechtecksignals (88) gemessen wird.

8. Verfahren nach einem der vorherigen Ansprüche, bei dem die vorzudetektierenden Antworten Modus-S-Antworten sind, die Mindestdauer der Nachrichten in der Größenordnung von 56 Mikrosekunden für die kurzen Antworten oder in der Größenordnung von 112 Mikrosekunden für die langen Antworten ist.

9. Verfahren zum Detektieren von Antworten in einem Sekundär-Radar, wobei die zu detektierenden Antworten eine Präambel und eine Nachricht umfassen, wobei die Präambel Protokolldaten enthält, wobei die Nachricht durch ein moduliertes Signal codiert wird, **dadurch gekennzeichnet, dass**:
- das Vordetektionsverfahren nach einem der vorherigen Ansprüche ausgeführt wird, um die zu detektierenden Antworten vorzudetektieren;
- eine vorhergesagte Position der Präambel jeder vordetektierten Antwort ermittelt wird;
- geprüft wird, ob vorbestimmte Protokolldaten an der vorhergesagten Position der Präambel vorhanden sind.

10. Detektionsverfahren nach Anspruch 9, bei dem die vorhergesagte Position der Präambel anhand des Anfangs- oder Endzeitpunkts des Signals ermittelt wird, das in Schritt (ii) des Vordetektionsverfahrens identifiziert wird.

11. Verfahren nach Anspruch 9 oder 10, bei dem die zu detektierenden Antworten Modus-S-Antworten sind, wobei eine Detektion erzeugt wird, wenn wenigstens N von vier Impulsen an der vorhergesagten Position der Präambel vorhanden sind, wobei N ein Parameter mit einem Wert zwischen 1 und 4 ist, wobei der Grenzwert 1 zum Detektieren von sehr verrauschten Antworten verwendet wird, wobei der Grenzwert 4 zum Detektieren von klaren Antworten verwendet wird.

12. Verfahren zum Detektieren von Antworten in einem Sekundär-Radar, wobei die zu detektierenden Antworten eine durch ein moduliertes Signal codierte Nachricht umfassen, **dadurch gekennzeichnet, dass**:
- das Vordetektionsverfahren nach einem der Ansprüche 1 bis 8 ausgeführt wird, um die zu detektierenden Antworten vorzudetektieren;
- der Anfangs- oder Endzeitpunkt der Nachricht ermittelt wird;
- ein Taktsignal CLK mit einer Bitrate anhand des ersten Zustandsübergangs erzeugt wird, der nach einem Zustand einer Dauer auftritt, die gleich der Dauer eines Bits einer Modus-S-Nachricht ist, und während der gesamten Dauer der Nachricht die Periode des Takts gleich der Dauer eines Bits der Nachricht ist;
- die Position des Anfangs der Antwort anhand des Anfangs oder des Endes der Nachricht präzise ermittelt wird, wobei diese Position anhand des letzten erzeugten Taktimpulses (95) ermittelt wird.
